Europäisches Patentamt

(19) European Patent Office

Office européen des brevets

(11) EP 0 405 648 B1

(12) EUROPEAN PATENT SPECIFICATION

(45) Date of publication and mention
of the grant of the patent:
06.03.1996 Bulletin 1996/10

(51) Int. Cl.$^6$: **A23F 5/04**, A23F 5/02

(21) Application number: 90201592.4

(22) Date of filing: 19.06.1990

(54) **Process for making reduced density coffee**

Verfahren zur Herstellung von Kaffee mit reduzierter Dichte

Procédé de préparation de café à densité réduite

(84) Designated Contracting States:
DE FR GB IT

(30) Priority: 30.06.1989 US 374424

(43) Date of publication of application:
02.01.1991 Bulletin 1991/01

(73) Proprietor: THE PROCTER & GAMBLE COMPANY
Cincinnati, Ohio 45202 (US)

(72) Inventors:
  • Kirkpatrick, Steven Jacob
    Cincinnati, Ohio 45251 (US)
  • Gutwein, Roger William
    Cincinnati, Ohio 45247 (US)
  • Bertagna, Richard Walter
    Mason, Ohio 45040 (US)

(74) Representative: Hirsch, Uwe Thomas et al
Procter & Gamble GmbH
Sulzbacher Strasse 40-50
D-65824 Schwalbach am Taunus (DE)

(56) References cited:
EP-A- 0 132 877         DE-A- 2 531 390
US-A- 3 589 912         US-A- 4 540 591

  • Coffee Processing Technology, 1969, vol.1, page
    228 (Sivetz M; AVI PUBLI CO)(cf sheet 46)

**Description**

TECHNICAL FIELD

This invention relates to the processing of coffee beans to make a roast coffee product. More particularly, it relates to a process for making a reduced density coffee product having a more uniformly roasted bean.

BACKGROUND

Historically roast and ground coffee has been marketed on supermarket shelves by weight in 16-ounce cans. However, a recent trend in the coffee market has resulted in the demise of the 16-ounce weight standard. This trend emerged in 1988, when major coffee manufacturers began marketing 13-ounce blends. The blends were prepared using "fast roast" technology that resulted in a lower density bean. Thirteen ounces of these lower density blends have nearly the same volume as the traditional 16-ounce blends. As a result they could be marketed in the old 1-pound cans and were priced about 20 cents below the previous 16-ounce list price because they used fewer beans. This down-weighting of coffee in cans has met with widespread acceptance in the industry.

Many recent "fast roast" coffees also have a higher yield of brew solids than previous 16-ounce coffees. These high yield fast roast and ground coffees exhibit improved extraction characteristics during brewing. Thus, they can make as many cups of coffee (or more) per 13 ounces as were previously prepared from 16 ounces.

Fast roasting results in a puffed or somewhat popped bean. Fast roasting of coffee typically occurs in large multistage roasters (e.g., Probat Thermalo, Jetzone, etc.) with very large heat inputs. These high heat inputs result in the rapid expansion of the roasted bean.

Fast roast processing is not without its shortcomings. The high heat inputs necessary to puff the bean result in a high degree of bean roasting variation within the roaster. Also, tipping and burning of the outer edges of the bean are a major problem.

It is therefore an object of the present invention to produce a reduced density roast coffee bean that is more uniformly roasted.

It is also an object of the present invention to produce roast beans with less bean-to-bean color variation and less color variation within each bean.

Another object of the present invention is to produce roast coffee beans with less tipping and burning of the outer edges of the roasted bean than conventionally fast roasted beans.

These and other objects of the invention will become clear by the disclosure herein.

BACKGROUND ART

A. Moisture Content of Exported Green Beans

Sivetz et al., Coffee Technology, "Drying Green Coffee Beans", pp. 112-169 (1979), states that coffee beans are dried prior to export. Historically, solar drying was the method of choice. However, improved reliability and efficiency of machine dryers has led to their widespread use in the industry. The standard moisture target prior to export is about 12%. Sivetz also highlights the irreversible damage overdrying can have on coffee quality.

US Patent 4,540,591, Dar et al., discloses a 4 step process of treatment with steam, drying, roasting and cooling of coffee beans.

US Patent, 3,589,912, Alder et al., discloses a process of drying, partial roasting below a critical temperature and final roasting of coffee beans.

EP-A- 132 877 discloses a process to improve brewed coffee holding characteristics by quenching of the roasted coffee beans to a temperature below 149°C. The resulting coffee has a density and Hunter L colour in accordance with the present invention but allows a variation of colour between outside and inside of the beans of up to 10 Hunter L units.

B. The Effect of Green Bean Moisture Content on Roasted Density

Sivetz et al., supra, "Coffee Bean Processing", pp. 254-6 states that the bulk density of roasted beans will vary with degrees of roast, speed of roast, and original moisture content of the green beans. Sivetz goes on to say: "[f]ast roasts on large beans, especially new-crop coffees with more than average moisture, may cause a 10-15% larger swelling than normal." (emphasis added)

In a discussion of bean roasting, Clifford, Tea and Coffee Trade Journal, "Physical Properties of the Coffee Bean", pages 14-16, April 1986, states "Production of carbon dioxide, and its expansion along with water vapor, generate internal pressures in the range of 5.5 to 8.0 atmospheres and account for the swelling of the bean by some 170 to 230%."

EP 0 405 648 B1

U.S. Patent 4,737,376, Brandlein et al., issued April 12, 1988, describes a two-stage bubbling bed roasting process for producing low density (0.28 to 0.34 g/cc) coffee. During Stage 1 the beans are heated at 500° to 630°F (260°F - 332°C) for from 0.25 to 1.5 minutes at atmospheric pressure. During Stage 2 the beans are heated at a temperature equal to or less than Stage 1 for from 0.25 to 1.5 minutes at atmospheric pressure. The '376 patent discusses the importance of retaining a high internal bean moisture. It is stated that high internal bean moisture promotes hydrolysis reaction and allows the beans to remain more pliable during roasting. This is said to allow for greater expansion of the bean during roasting. Typically, the beans fed into the Stage 1 roaster have a moisture content of 10 ± 2%.

## SUMMARY OF THE INVENTION

The present invention relates to a process for producing reduced density roasted coffee beans, other than dark roasted beans, comprising the steps of: (1) pre-drying green coffee beans to a moisture content of from 0.5% to 10% by weight, (2) fast roasting the beans; and (3) cooling the roasted beans. The green beans for the reduced density coffee beans have not been subjected to a steaming process prior to the first pre-drying process step. The resulting roasted beans have a Hunter L-color of from 19 to 25, a Hunter ΔL-color of less than 1.2 and a whole roast tamped bulk density of from 0.28 to 0.38 g/cc. The product beans can be ground or ground and flaked after roasting.

## BRIEF DESCRIPTION OF THE DRAWING

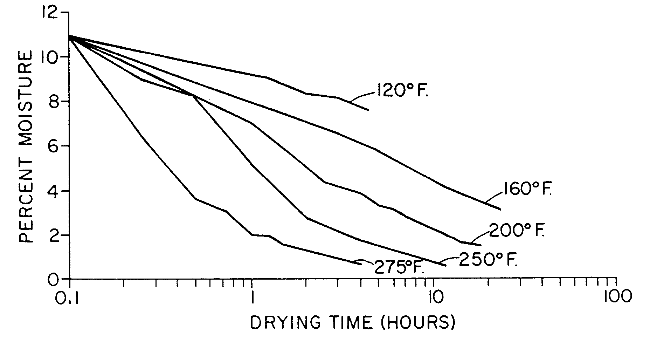

Figure 1 shows a typical drying curve for a typical blend of green coffee beans having an initial moisture content of 11% that are air-dried on a model 42200 Wenger belt dryer under 300 pound (136 kg) batch conditions. The blend consists of equal parts Robusta, natural Arabica, and washed Arabica beans.

## DETAILED DESCRIPTION OF THE INVENTION

All percents and ratios used herein are on a weight basis unless otherwise indicated.

### Definitions

As used herein, the term "reduced density coffee" relates to roasted coffee which has a roasted whole bean tamped density of from 0.28 to 0.38 gm/cc.

As used herein, the term "1-pound coffee can" relates to a coffee container which has a volume of 1000 cc. Historically, one pound (16 oz.) of coffee was sold in this volume container.

As used herein, the term "pre-drying" relates to a green bean moisture removal operation which occurs prior to roasting, typically, less than 1 day prior to roasting.

As used herein, the terms "tipping" and "burning" relate to the charring of the ends and outer edges of a bean during roasting. Tipping and burning of beans results in a burnt flavor in the resulting brewed beverage.

The term "density", as used herein, refers to bulk density, i.e. the overall density of a plurality of particles measured after vibratory settlement.

As used herein, the term "percent moisture" relates to the amount of water in a green bean, a roasted bean or ground and roasted bean on a wet-basis. Moisture content is determined by oven drying. First, the material is ground to a mean particle size of about 900 μm. Ten grams of ground material is then weighed into a drying dish and placed in a 105°C drying oven for 16 hours. The weight loss from the sample represents the moisture in the original sample and, accordingly, is used to calculate the percent moisture.

### Pre-drying of Coffee Prior to Roasting

It has now surprisingly been discovered that reduced density coffee can be produced from green coffee beans having a moisture content of less than about 10%. This discovery is contrary to prior thinking that high levels of moisture and the resulting steam expansion in the bean during rapid roasting is responsible for the swelling/puffing that results in a reduced density bean.

Without being bound to theory, it is believed that water is a possible contributor to coffee swelling/puffing, but not at the high levels discussed in the prior literature.

In the process of the present invention, green coffee beans having an initial moisture content greater than 10%, preferably greater than 10% to 14%, most preferably greater than 10% to 12%, are first dried to a moisture content of from 0.5 to 10%, preferably from 0.5% to 7%, most preferably 3%.

The drying stage, according to the present invention, results in partially dehydrated coffee bean without causing any significant roasting-related reactions to take place. Roasting reactions are described in *Sivetz*, supra, pp. 250-262, incorporated herein by reference.

3

Without being bound by theory, it is believed that the key to the pre-drying step of the present invention is that the moisture content of the resulting beans is relatively uniform throughout the bean, i.e. the moisture profile within the beans has equilibrated. Accordingly, the method of pre-drying is not critical, provided the moisture content of the resulting bean is uniformly low and no burning or roasting occurs. Beans with high moisture contents in their center and low moisture contents near the outer edges should not be charged to the roaster until such equilibration occurs.

Green bean drying involves the simultaneous application of heat and removal of moisture from the green beans. As applied to the present invention, moisture removal, i.e. dehydration, can be accomplished by heated air, heated surfaces, microwave, dielectric, radiant or freeze dryers. These drying operations are described in Fellows, Food Processing Technology, Chapters 14, 17 and 20, incorporated herein by reference. The preferred drying method is heated air drying; however, inert gases (e.g. helium and nitrogen) can also be used. Fluidized bed heated air dryers, rotary dryers, belt dryers, tray dryers, continuous dryers and conveyor and convective dryers are particularly preferred; rotary or belt dryers are most preferred.

Fluidized bed dryers may be batch or continuous. Continuous fluidized bed dryers can be fitted with a vibrating base to help to advance the beans. Continuous "cascade" systems, in which the beans are discharged under gravity from one tray to next can be used for higher production rates. Fluidized bed dryers suitable for use in the present invention include those manufactured by APV Crepaco, Inc., Attleboro Falls, MA; Bepex Corp., Rolling Meadows, IL; Littleford Bros., Inc., Florence, KY; and Wolverine Corporation, Merrimac, MA.

Rotary dryers consist of a slightly inclined rotating metal cylinder, fitted with internal flights to cause the beans to cascade through a stream of hot air as they advance through the dryer. Air flow can be parallel or counter-current to the beans. Rotary dryers suitable for use in the present invention include those manufactured by APV Crepaco, Inc., Tonawanda, NY; Aeroglide Corp., Raleigh, NC; Blaw-Knox Food & Chemical Equipment Co., Buflovak Division, Buffalo, NY; and Littleford Bros. Inc., Florence, KY.

Belt dryers suitable for use in the present invention include those manufactured by APV Crepaco, Inc., Attleboro Falls, MA; The National Drying Machinery Co., Philadelphia, PA; C. G. Sargent's Sons Corp., Westford, MA; Aeroglide Corp., Raleigh, NC; and Proctor & Schwartz, Inc., Horsham, PA. Chamber dryers suitable for use in the present invention include those manufactured by Wyssmont Company, Inc., Fort Lee, NJ. Continuous conveyor dryers suitable for use in the present invention include those manufactured by APV Crepaco, Inc., Attleboro Falls, MA; The National Drying Machinery Co., Philadelphia, PA; C. G. Sargent's Sons Corp., Westford, MA; The Witte Co., Inc., Washington, NJ; Wyssmont Company, Inc., Fort Lee, NJ; Proctor & Schwartz, Inc., Horsham, PA; Wenger Mfg. Inc., Sabetha, KS; Werner & Pfleiderer Corp., Ramsey, NJ; and Wolverine Corp., Merrimac, MA. Convective dryers suitable for use in the present invention include those manufactured by APV Crepaco, Inc. Tonawanda, NY; The National Drying Machinery Co., Philadelphia, PA; Wyssmont Company, Inc., Fort Lee, NJ; Proctor & Schwartz, Inc., Horsham, PA; and Wenger Mfg. Inc., Sabetha, KS.

The drying step should be conducted under gentle conditions. Large heat inputs and temperature differentials can result in tipping and burning of the bean or premature roast-related reactions. Drying curves for a typical blend of green coffee beans with an initial moisture content of 11% are shown in Figure 1. The drying curve was established on a Model 42200 Wenger Belt Dryer under 300 lb. batch conditions. The blend consists of equal parts Robusta, natural Arabicas and washed Arabica beans. Preferably, commercial drying is achieved by a convective air stream, which enters the drying compartment containing from 0% to 70% moisture at a temperature of from 70° to 350°F (21° to 177°C), preferably 160° to 250°F (71° to 121°C) for from 1 to 24 hours, preferably from 1 to 6 hours, most preferably from 2 to 6 hours.

Slow drying using conventional drying units, like the ones described above, are easily fitted into existing commercial roasting lines and are the preferred commercial embodiment of the present invention. However, other drying schemes which achieve the same uniformity of moisture will produce a similar result and are also contemplated by the present invention. Examples of alternative drying schemes include: vacuum drying; warehouse-type drying (i.e. storage in a dehumidified warehouse for several months); or pulse drying by heating the beans with one or more short pulses of heat, e.g., 1 sec.-1 min. at 300°-1000°F (149°C-538°C), and then allowing the moisture and temperature within the bean to equilibrate.

Warehouse-type drying can be performed in large rooms, warehouse or storage silos. The coffee may remain in the shipping bag provided air is free to flow in and out of the bag (e.g. a coarse weave burlap bag). Slow drying of this type is typically accomplished with air at 70° to 120°F (21° to 49°C) and a relative humidity of less than 25%. Optionally, a small air flow is distributed throughout the drying environment. The time required to achieve desired moistures is a function of air distribution, air velocity, air temperature, air relative humidity and the initial moisture content of the green beans. Typically, the moisture levels are monitored periodically during the warehouse-type dryer period. The drying medium is not limited to air; inert gases (e.g. nitrogen and helium) can also be used.

After the green coffee beans have been uniformly pre-dried and the moisture profile has equilibrated, they are ready for roasting. The beans should have minimal contact, preferably no contact, with moisture to prevent the absorption thereof. The pre-dried beans should not be allowed to rehydrate to a moisture level greater than 10%, preferably not greater than 7% and most preferably not greater than 3%. It is desirable, but not critical, to charge the beans to the roaster as soon as possible after pre-drying.

Roasting of the Dried Beans

The process of the present invention combines the above pre-drying stage with a "fast" roaster. These roasters are characterized by their ability to provide an expanded roast bean with a whole roast tamped bulk density of from 0.28 to 0.38 gm/cc.

Fast roasters suitable for use in the present invention can utilize any method of heat transfer. However, convective heat transfer is preferred, with forced convection being most preferred. The convective media can be an inert gas or, preferably, air. Typically, the pre-dried beans are charged to a bubbling bed or fluidized bed roaster where a hot air stream is contacted with the bean. Fast roasters operate at inlet air temperatures of from 350° to 1200°F (177° to 649°C), preferably from 400° to 800°F (204° to 427°C), at roast times from 10 seconds to 5.5 minutes, preferably from 10 to 47 seconds.

In a typical batch fast roast, a Thermalo Model 23R roaster manufactured by Jabez Burns, is charged with from 100 to 300 lbs. (from 14 to 136kg) of dried beans. The beans are roasted for from 1 to 3 minutes at a burner rate of from 1 million to 3 million Btu/hr (293 kW to 879 kW) and an initial preheat temperature of from 300° to 700°F (149° to 371°C).

In a typical continuous fast roast, a Jetzone Model 6452 fluidized bed roaster, manufactured by Wolverine Corp., is operated with an inlet air temperature of from 500° to 700°F (260° to 371°C) and a residence time of from 15 to 60 sec at typical burner rates of 2.4 MM Btu/hr (about 703 kW).

Roasting equipment and methods suitable for roasting coffee beans according to the present invention are described, for example, in Sivetz, *Coffee Technology*, Avi Publishing Company, Westport, Conn. 1979, pp. 226-246, incorporated herein by reference. See also, U.S. Patent 3,964,175 to Sivetz, issued June 22, 1976, which discloses a method for fluidized bed roasting of coffee beans.

Other fast roast methods useful in producing reduced density coffee are described in U. S. Patent No. 4,737,376 to Brandlein et al., issued April 12, 1988; U.S. Patent No. 4,169,164 to Hubbard et al., issued September 25, 1979; and U.S. Patent 4,322,447 to Hubbard, issued March 30, 1982, all of which are incorporated herein by reference.

Final roasting according to the present invention is characterized by two factors: the color of the final roast bean, and the density of the product.

Roast Bean Color: The coffee beans are roasted to a desired roast color other than a dark roast color. Lighter roasts can be used to produce clear, reddish cup colors with slightly weaker flavors. The Hunter Color "L" scale system is generally used to define the color of the coffee beans and the degree to which they have been roasted. A complete technical description of the system can be found in an article by R. S. Hunter "Photoelectric Color Difference Meter", *J. of the Optical Soc. of Amer.*, 48, 985-95 (1958). In general, it is noted that Hunter Color "L" scale values are units of light reflectance measurement, and the higher the value is, the lighter the color is since a lighter colored material reflects more light. In particular, in the Hunter Color system the "L" scale contains 100 equal units of division; absolute black is at the bottom of the scale (L=0) and absolute white is at the top (L=100). Thus, in measuring degrees of roast, the lower the "L" scale value the greater the degree of roast, since the greater the degree of roast, the darker is the color of the roasted bean.

The roast coffee beans of the present invention have a Hunter L-color of from 19 to 25, preferably from 19 to 23.

Reduced Density: The roast coffee beans of the present invention have a whole roast tamped bulk density of from 0.28 to 0.38 g/cc, preferably from 0.30 to 0.35 g/cc.

Cooling the roasted beans.

As soon as the desired roast bean color is reached, the beans are removed from the heated gases and promptly cooled by typically ambient air and/or a water spray. Cooling of the beans stops the roast-related pyrolysis reactions.

Water spray cooling, also known as "quenching", is the preferred cooling method in the present invention. The amount of water sprayed is carefully regulated so that most of the water evaporates off. Therefore, minimal water is absorbed by the roasted beans, e.g. typically less than 6%.

Grinding of the roasted beans.

After the roast coffee beans have been cooled according to the present invention, they can be prepared for brewing. Coffee brewing is achieved by percolation, infusion or decoction. During a brewing operation, most coffee solubles and volatiles are extracted into an aqueous medium. This extraction is made more efficient by breaking down the whole bean into smaller pieces. This process is generally referred to as "grinding". Preferred grinding techniques result in an average particle size of from 300 to 3000 microns.

Particle size also impacts the brew strength of coffees prepared from different brewing apparatus. Automatic Drip Coffee grinds typically have an average particle size of about 900μm and percolator grinds are typically from 1500 μm to 2200μm.

Descriptions of grinding operations suitable for use in the present invention are described in Sivetz, supra. pp. 265-276, incorporated herein by reference.

The roast and ground coffee beans of the present invention have a ground tamped bulk density of from about 0.25 to about 0.39 gm/cc, preferably from about 0.28 to about 0.36 gm/cc.

## Flaking of the resulting ground & roast coffee

Recent developments have lead to "flaked" coffees with improved characteristics. Flaked coffee is described in: U.S. Patent 4,331,696; U.S. Patent 4,267,200; U. S. Patent 4,110,485; U. S. Patent 3,660,106; U. S. Patent 3,652,293; and U. S. Patent 3,615,667, all of which are incorporated herein by reference.

Flaked ground & roast products of the present invention are desirable. Preferred flaked products are produced by grinding the roast coffee to an average particle size from 300 to 3000μm, normalizing the ground product, and then milling the coffee to a flake thickness of from 2 to 40 thousandths of an inch (51 to 1016μm), preferably from 10 to 30 (254 to 762μm), most preferably from 20 to 24 (508 to 610μm).

## Characteristics of the Roasted Products

The benefits of the present invention are observed by "fast roasting" the beans to produce a reduced density roast bean. Surprisingly, it has been discovered that when green beans are pre-dried prior to roasting according to the present invention, the resulting roasted beans exhibit the following characteristics:

More Uniform Roasting: The roasted beans produced according to the present invention show a high degree of roast uniformity when compared to non-dried beans roasted in a similar manner.

Less Bean to Bean Color Variation: Bean-to-bean color variation within the roast is an indication of uniformity of roast. Color variations within the bean are also another indicator of roast uniformity. Both are important to the aesthetic appeal of the coffee to the consumer.

The Hunter L-scale system is employed in the present invention to establish uniformity of roast within the bean. Hunter L-color of the roast bean is normally greater than that of the ground product. The reason for this effect is that the exterior of the roast bean is roasted to a greater degree (i.e. darker) than the interior of the bean. As used herein, the term Hunter $\Delta$ L-color relates to this decrease in the Hunter L-color of roast beans when compared before and after grinding and is defined as follows:

$$\text{Hunter } \Delta \text{ L-color} = L_{before} - L_{after}$$

where,

$L_{before}$     = Hunter L-color of the whole roast bean; and
$L_{after}$     = Hunter L-color of the ground roast bean.

Hunter $\Delta$L-color values for roast and ground coffee according to the present invention are less than 1.2, preferably less than 0.6.

Increased Flavor Strength: The brew flavor strength of the coffees produced by the present invention is typically greater than that produced by prior 16-ounce coffee blends, and even fast roasted non-dried reduced density coffee blends.

Roast Time Reduction: Reduced roast bean densities are achieved under the roast conditions described above in from 10 seconds to 30 minutes, preferably from 10 seconds to 5.5 minutes, most preferably 10 to 47 seconds. It has been observed that the roasting times of the present invention are about 2/3 those observed when no pre-drying is utilized.

## Preferred Coffee Varieties

It has been observed that the process of the present invention is suitable for roasting all varieties of coffee. However, the flavor character of certain coffee is actually improved by the claimed process. Milds and washed Arabicas show a slight improvement, while Brazilians and other natural Arabicas show more improvement. Robustas are improved the most and have a noticeably less harsh flavor. Accordingly, Brazilians, natural Arabicas, washed Arabicas and Robustas are preferred beans for use in the present invention. Robustas being the most preferred.

The blending of beans of several varieties, before and after roasting or pre-drying, is also contemplated by the present invention. Likewise, the processing of decaffeinated or partially decaffeinated coffee beans are also contemplated by the present invention.

ANALYTICAL METHODS

I. Whole Roast Tamped Bulk Density Determination:

This method specifies the procedure for determining the degree of puffing that occurs in the roasting of green coffee. This method is applicable to both decaffeinated and non-decaffeinated whole roasts.

Apparatus

Weighing container: 1,000 ml stainless steel beaker or equivalent
Measuring container: 1,000 ml plastic graduated cylinder; 5 ml graduations
Scale: 0.1 gm sensitivity
Vibrator: Syntrol Vibrating Jogger; Model J-1 or equivalent. Syntron Company - Homer City, PA
Funnel: Plastic funnel with tip cut off to about 1" outlet
Automatic Timer: Electric, Dimco-Gray; Model No. 171 or equivalent

Operation

Weigh 200 grams of whole bean coffee to be tested into beaker. Place the graduated cylinder on the vibrator. Using the funnel, pour the coffee sample into the cylinder. Level the coffee by gently tapping the side of the cylinder. Vibrate 30 seconds at No. 8 setting. Read volume to nearest 5 ml.
Tamped density can be determined by dividing the weight of the coffee by the volume occupied (after vibrating) in the graduated cylinder.

$$\text{Tamped Density} = \frac{\text{Weight of Coffee (gms)}}{\text{Volume of Coffee (cc)}}$$

II. Ground Tamped Bulk Density Determination:

This method is applicable to ground or flaked product.

Apparatus

Weighing container: 1,000 ml glass beaker or equivalent
Measuring container: 1,000 ml plastic graduated cylinder; 10 ml graduations
Scale: 0.1 gm or 0.01 ounce sensitivity
Vibrator: Syntron Vibrating Jogger - Model J-1A (or equivalent). Syntron Company - Homer City, PA. (Calibrated by Factory Analytical Services)
Funnel: Plastic funnel with tip cut off to about 1" outlet hole.

Automatic timer (optional): Automatic timer - automatic shutoff and reset.

Calibration device: Amplitude Meter and Transducer Mod. AM-100, Power Time Control, Indiana, PA.

Calibration of Syntron Vibrating Jogger

An amplitude of 0.035 inches results in consistent density measurements with little product break-up when using the 300 gram density method.

Operation

Weigh 300 grams of coffee to be measured into the beaker. Place the graduate cylinder on the vibrator table. Pour the coffee through the funnel into the graduate cylinder. Level the coffee by gently tapping the side of the cylinder. Vibrate for one minute. Read volume.

Calculation

$$\text{Tamped Density in gm/cc} = \frac{300 \text{ gm}}{\text{Volume of coffee in ml.}}$$

The following examples are specific embodiments of the present invention but are not intended to limit it:

## EXAMPLE 1

### Thermalo Roast

A blend of green coffee beans with an initial moisture content of 11%, consisting of 1/3 washed Arabicas, 1/3 natural Arabicas, and 1/3 natural Robustas are pre-dried at 250°F (121°C) for 2 hours on a Wenger belt dryer. The pre-dried beans are then roasted in a Thermalo roaster, Model Number 23R, manufactured by Jabez Burns, under fast conditions using 100 lb. batches (45 kg) and a gas burner input rate of 1.7 million Btu/hr (498 kW). Roasting time of 120 seconds is used. Whole roast tamped bulk density is less than 0.35 g/cc. The whole roast beans have a Hunter L-value of 19. The roast beans are then water quenched. The quenched coffees are then cracked, normalized and ground to an automatic drip coffee grind of 900µm and flaked to 20 thousandths of an inch (508µm) flake thickness. The ground tamped bulk density is less than 0.335 g/cc and the Hunter ΔL is less than 0.6. The flavor strength of the resulting coffee is greater than that of an 11.5 oz. ground and roast coffee produced without predrying.

## EXAMPLE 2

### Jetzone Fluidized Bed Roast

Green Robusta coffee beans are pre-dried at 160°F (71°C) for 6 hours in a Wenger belt dryer at a feed rate of 1300 pounds (590kg) per hour. Next, the pre-dried beans are cooled with dry ambient air and then roasted at 600°F (315°C) for 47 seconds on a Jetzone fluid bed roaster, Model 6452, manufactured by Wolverine Corp. with a burner rate of 2.4 mm Btu/hr (703kW) and an air recycle of 400 cfm (11,300 liters/min.). The roast beans are cooled to ambient temperature with 70°F (21°C) air at a relative humidity of 40%. The resulting whole roast tamped bulk density is 0.34 g/cc and the Hunter L-value is 19.

## EXAMPLE 3

### Fluidized Bed Roast

Pre-dried coffee beans, prepared according to Example I, are fast roasted in a Jetzone, Model 6452, two-stage, fluidized bed, continuous coffee roaster manufactured by Wolverine Corp. at 440°-470°F (227° to 243°C) for 50 seconds in the first stage, and 515°-545°F (268° - 285°C) for 50 seconds in the second stage. The roaster is operated at a 1070 pound (486 kg) per hour feed rate and at a 2.4 btu/hr (703 kW) burner rate. The roast beans are cooled to ambient temperature with 70°F (21°C) air at a relative humidity of 40%. The resulting whole roast tamped bulk density is 0.38 and the whole roast Hunter L-color is 22. The beans are then ground to an automatic drip coffee grind of 900 µm. The Hunter ΔL value is less than 0.6 and the ground tamped bulk density is 0.36. The flavor strength of the resulting coffee is greater than that of a 13-oz. ground and roast coffee prepared without predrying.

## EXAMPLE 4

### Thermalo Roast

Three batches of green coffee beans with an initial moisture content of 11% are pre-dried at 160°F (71°C) for 6 hours on a Wenger belt dryer. The batches consist of a natural Arabica batch, a Robusta batch and a washed Arabica batch. The pre-dried beans are then roasted on a Thermalo roaster, Model Number 23R, manufactured by Jabez Burns, under fast conditions using 100 lb. (45 kg) batches and a gas burner input rate of 1.7 million Btu/hr (498 kW). A roast time of 120 seconds is used. Whole roast tamped bulk density is less than 0.35 g/cc. The roast beans are then water quenched and the three batches are combined in equal proportions. The whole roast Hunter L value is in the range of from 17 to 22. The portions having Hunter L values of less than 19 are excluded from further considerations. The quenched coffees were then cracked, normalized and ground to an automatic drip coffee grind of 900µm, and flaked to 20 thousandths of an inch (508µm) flake thickness. Ground tamped bulk density is less than 0.335 g/cc and the Hunter ΔL value is less than 0.6. The flavor strength of the resulting coffee is greater than that of a 10 oz. ground and roast coffee prepared without predrying.

## EXAMPLE 5

The roast coffee of Example 2 is ground using a Gump Model 666 grinder manufactured by Modern Press. The grinding conditions are set to yield an average particle size of from 300 to 3000 µ. The resulting Hunter ΔL is less than 0.6. The flavor strength of the resulting coffee is greater than that of an 11.5 oz. ground and roast coffee.

EXAMPLE 6

The ground and roast coffee of Example 5 is flaked using an 18"x33" Ross roll mill hydraulic flaking unit manufactured by Ross Equipment Co. The milling gap is set to yield a flake thickness of from 2 to 40 thousandths of an inch (51 to 1016μm).

**Claims**

1. A process for producing roasted coffee beans other than dark roasted beans, said process being characterized by comprising the combination of the following steps :

   (a)first, drying green coffee beans to a moisture content of from 0.5% to 7% by weight, wherein the drying is conducted at a temperature of from 21°C to 177°C for from 1 hour to 24 hours; then
   (b)roasting the dried beans at a temperature of from 177°C to 649°C for from 10 seconds to not longer than 5.5 minutes; and then
   (c)cooling the roasted beans; and with the proviso that the green beans have not been subjected to a steaming process prior to process step (a).

2. A process according to claim 1 characterized in that the roasting step (b) is conducted at a temperature of from 204°C to 427°C for from 10 to 47 seconds.

3. A process according to any of the preceding claims characterized in that the drying step (a) is conducted at from 71°C to 121°C for from 1 to 6 hours.

4. A process according to any of the preceding claims characterized in that the whole roast tamped bulk density of the roasted beans is from 0.30 to 0.35 gm/cc.

5. A process according to any of the preceding claims characterized in that the dried green coffee beans have a moisture content of 3% after the drying step (a).

**Patentansprüche**

1. Verfahren zur Herstellung von gerösteten Kaffeebohnen, ausgenommen dunkel geröstete Kaffeebohnen, **gekennzeichnet** durch die folgenden Schritte in Kombination:

   (a) zunächst Trocknen von grünen Kaffeebohnen auf einen Feuchtigkeitsgehalt von 0,5 bis 7 Gew.-Prozent, wobei das Trocknen bei einer Temperatur von 21°C bis 177°C für 1 Stunde bis 24 Stunden erfolgt, und anschließend

   (b) Rösten der getrockneten Bohnen bei einer Temperatur von 177°C bis 649°C für 10 Sekunden bis höchsten 5,5 Minuten, und sodann

   (c) Kühlen der gerösteten Bohnen, mit der Maßgabe, daß die grünen Bohnen vor dem ersten Verfahrensschritt (a) nicht einer Dampfbehandlung unterworfen worden sind.

2. Verfahren nach Anspruch 1, dadurch **gekennzeichnet**, daß der Röstschritt (b) bei einer Temperatur von 204°C bis 427°C für 10 bis 47 Sekunden durchgeführt wird.

3. Verfahren nach einem der vorhergehenden Ansprüche, dadurch **gekennzeichnet**, daß der Trocknungsschritt (a) durchgeführt wird bei 71°C bis 121°C für 1 bis 6 Stunden.

4. Verfahren nach einem der vorhergehenden Ansprüche, dadurch **gekennzeichnet**, daß die verdichtete Gesamtröstungs-Schüttdichte der gerösteten Bohnen 0,30 bis 0,35 g/c$^3$ beträgt.

5. Verfahren nach einem der vorhergehenden Ansprüche, dadurch **gekennzeichnet**, daß die getrockneten grünen Kaffeebohnen einen Feuchtigkeitsgehalt von 3 % nach dem Trocknungsschritt (a) aufweisen.

**Revendications**

1. Procédé de production de grains de café torréfiés autres que des grains torréfiés foncés, ledit procédé étant caractérisé en ce qu'il comprend la combinaison des étapes suivantes:

   (a) d'abord, séchage des grains de café verts à une teneur en humidité de 0,5% à 7% en poids, ledit séchage étant réalisé à une température de 21°C à 177°C pendant 1 heure à 24 heures; puis
   (b) torréfaction des grains séchés à une température de 177°C à 649°C pendant 10 secondes à pas plus de 5,5 minutes; et ensuite
   (c) refroidissement des grains torréfiés, à condition que les grains verts n'aient pas été soumis à un traitement à la vapeur d'eau avant l'étape opératoire (a).

2. Procédé selon la revendication 1, caractérisé en ce que l'étape de torréfaction (b) est réalisée à une température de 204°C à 427°C pendant 10 à 47 secondes.

3. Procédé selon l'une quelconque des revendications précédentes, caractérisé en ce que l'étape de séchage (a) est réalisée à une température de 71°C à 121°C pendant 1 à 6 heures.

4. Procédé selon l'une quelconque des revendications précédentes, caractérisé en ce que la masse volumique apparente des grains entiers tassés et torréfiés est de 0,30 à 0,35 g/cm$^3$.

5. Procédé selon l'une quelconque des revendications précédentes, caractérisé en ce que les grains de café verts séchés ont une teneur en humidité de 3% après l'étape de séchage (a).